(19) Europäisches Patentamt
European Patent Office
Office européen des brevets

(11) EP 2 792 523 A2

(12) **EUROPÄISCHE PATENTANMELDUNG**

(43) Veröffentlichungstag:
22.10.2014 Patentblatt 2014/43

(51) Int Cl.:
B60K 6/48 (2007.10)　　　B60K 6/36 (2007.10)
B60K 6/547 (2007.10)　　B60W 10/02 (2006.01)
B60W 10/06 (2006.01)　　B60W 10/08 (2006.01)
B60W 10/11 (2012.01)　　B60W 20/00 (2006.01)
B60W 30/188 (2012.01)

(21) Anmeldenummer: 14160884.4

(22) Anmeldetag: 20.03.2014

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 27.03.2013 DE 102013005252

(71) Anmelder: GETRAG Getriebe- und Zahnradfabrik
Hermann Hagenmeyer GmbH & Cie KG
74199 Untergruppenbach (DE)

(72) Erfinder:
• Wenzel, Sören
74850 Schefflenz (DE)
• Sehic, Stevens
71732 Tamm (DE)

(74) Vertreter: Witte, Weller & Partner Patentanwälte
mbB
Postfach 10 54 62
70047 Stuttgart (DE)

(54) **Hybrid-Antriebsstrang und Verfahren zum Steuern desselben**

(57) Hybrid-Antriebsstrang (10) für ein Kraftfahrzeug (12), mit einer ersten Antriebseinheit (14), die eine erste Antriebseinrichtung (16) aufweist, über die erste Antriebsleistung bereitstellbar ist; einer zweiten Antriebseinheit (18), die eine zweite Antriebseinrichtung (20) aufweist, über die zweite Antriebsleistung bereitstellbar ist; einer Abtriebseinrichtung (34), die mit angetriebenen Rädern (38L, 38R) des Kraftfahrzeuges (12) verbindbar ist; einer ersten Getriebeanordnung (22), die einen ersten Getriebeeingang (24) und einen ersten Getriebeausgang (26) aufweist; einer zweiten Getriebeanordnung (28), die einen zweiten Getriebeeingang (30) und einen zweiten Getriebeausgang (32) aufweist; wobei die erste Antriebseinrichtung (16) mit dem ersten Getriebeeingang (24) verbunden ist und wobei die zweite Antriebseinrichtung (20) mit dem zweiten Getriebeeingang (30) verbunden ist; und wobei der erste und der zweite Getriebeausgang (26, 32) mit der Abtriebseinrichtung (34) verbunden sind. Dabei sind der erste und der zweite Getriebeeingang (24, 30) über eine Kupplung (40) miteinander verbindbar oder voneinander trennbar (Fig.1).

Fig.1

EP 2 792 523 A2

**Beschreibung**

Die vorliegende Erfindung betrifft einen Hybrid-Antriebsstrang für ein Kraftfahrzeug, mit einer ersten Antriebseinheit, die eine erste Antriebseinrichtung aufweist, über die erste Antriebsleistung bereitstellbar ist, mit einer zweiten Antriebseinheit, die eine zweite Antriebseinrichtung aufweist, über die zweite Antriebsleistung bereitstellbar ist; mit einer Abtriebseinrichtung, die mit angetriebenen Rädern des Kraftfahrzeuges verbindbar ist, mit einer ersten Getriebeanordnung, die einen ersten Getriebeeingang und einen ersten Getriebeausgang aufweist, mit einer zweiten Getriebeanordnung, die einen zweiten Getriebeeingang und einen zweiten Getriebeausgang aufweist, wobei die erste Antriebseinrichtung mit dem ersten Getriebeeingang verbunden ist und wobei die zweite Antriebseinrichtung mit dem zweiten Getriebeeingang verbunden ist, und wobei der erste und der zweite Getriebeausgang mit der Abtriebseinrichtung verbunden sind.

Ein derartiger Hybrid-Antriebsstrang ist aus dem Dokument WO 2012/ 079683 A2 bekannt.

Auf dem Gebiet der Hybrid-Antriebsstränge ist es bekannt, einer Antriebseinheit in Form eines Verbrennungsmotors eine weitere Antriebseinheit in Form einer elektrischen Maschine zuzuordnen. Die elektrische Maschine weist dabei in der Regel eine deutlich kleinere Leistung auf als der Verbrennungsmotor. Die elektrische Maschine kann in manchen Ausführungsformen Antriebsleistung zum rein elektrischen Fahren bereitstellen, wobei der rein elektrische Fahrbetrieb aufgrund des bereitzustellenden elektrischen Energiespeichers begrenzt ist. Hierbei muss in der Regel ein Kompromiss gefunden werden, da ein großer elektrischer Energiespeicher zu einem hohen Fahrzeuggewicht führt. Ein kleiner elektrischer Energiespeicher führt zu einer geringen elektrischen Reichweite. In vielen Fällen beträgt die elektrische Reichweite lediglich wenige Kilometer. Die elektrische Maschine kann jedoch auch für andere Betriebsarten verwendet werden, beispielsweise für einen Boost-Modus, zum Starten des Verbrennungsmotors oder zum Aufladen des elektrischen Energiespeichers (in einem Rekuperations-Betriebsmodus).

Derartige Hybrid-Antriebskonzepte schöpfen die Möglichkeiten von elektrischen Maschinen als Antrieb nicht aus. Denn elektrische Maschinen haben als Antriebsmotor den Vorteil, dass diese bereits bei niedrigen Drehzahlen ein hohes Drehmoment bereitstellen können und in vielen Betriebsarten einen besseren Wirkungsgrad aufweisen als der Verbrennungsmotor.

Ferner sind auf dem Gebiet der Hybrid-Antriebsstränge sogenannte "Range-Extender-Konzepte" bekannt. Der Grundgedanke dieser Konzepte besteht darin, zum Antrieb des Kraftfahrzeuges zumindest überwiegend eine elektrische Maschine zu verwenden. Ferner weisen derartige Konzepte generell eine zweite elektrische Maschine auf, die zum Aufladen des elektrischen Energiespeichers ausgelegt ist und mit dem Verbrennungsmotor verbunden oder verbindbar ist. Ein typischer Betriebszustand bei derartigen Range-Extender-Konzepten besteht darin, den Verbrennungsmotor in einem wirkungsgradgünstigen Drehzahlbereich zu halten und hiermit über die zweite elektrische Maschine den elektrischen Energiespeicher aufzuladen. Parallel hierzu wird aus dem elektrischen Energiespeicher Leistung für die erste elektrische Maschine verwendet, die das Fahrzeug antreibt. In manchen Ausführungsformen kann der Verbrennungsmotor hierbei unterstützend zum Antrieb verwendet werden, wodurch sich jedoch die Komplexität derartiger Range-Extender-Konzepte vergrößert.

Bekannte Range-Extender-Konzepte weisen ferner eine Getriebeanordnung auf. Hierbei ist es beispielsweise bekannt, das Getriebe mit einer einzigen festen Übersetzung auszustatten. Da die elektrische Maschine, die als Antriebsmotor wirkt, über einen großen Drehzahlbereich arbeiten kann, kann eine derartige Getriebeanordnung hinreichend sein. In anderen Getriebeanordnungen können mehrere Gangstufen vorgesehen sein. Beispielsweise ist es bekannt, die Getriebeanordnung als lastschaltfähiges Zweiganggetriebe auszubilden.

Nachteilig bei manchen Range-Extender-Konzepten ist es, dass diese bei einem Fahrprofil, bei dem zunächst in einer Stadt, dann über eine längere Strecke, und dann wieder in der Stadt gefahren wird, die Batterie zunächst in der Stadt rein elektrisch gefahren werden kann, dann jedoch auf der längeren Strecke im elektrischen Fahrbetrieb die Batterie relativ schnell entladen wird, so dass auf einen verbrennungsmotorischen Betrieb umgeschaltet werden muss. In diesem Fall ist es dann am Zielort im Stadtverkehr nicht mehr möglich, rein elektrisch zu fahren, da die Batterie entladen ist.

Zudem leiden viele Hybrid-Antriebskonzepte daran, dass das Beschleunigen mit dem Verbrennungsmotor und das Rekuperieren mit der elektrischen Maschine eine sehr schlechte Wirkungsgradkette bedeutet.

Ferner ist bei vielen Hybrid-Antriebsstrangkonzepten vorgesehen, die elektrische Maschine über einen möglichst weiten Betriebsbereich zu verwenden. Dies führt dann in der Konsequenz häufig zu großen Batteriegrößen, diese wiederum zu hohem Gewicht und folglich zu einer geringen Beschleunigungsfähigkeit des Kraftfahrzeuges gerade im unteren Geschwindigkeitsbereich.

Aus dem eingangs genannten Dokument WO 2012/079683 A2 ist ein Hybrid-Antriebsstrang bekannt, der eine einzelne elektrische Maschine und einen einzelnen Verbrennungsmotor aufweist. Die Antriebseinrichtung der elektrischen Maschine ist über ein Zweiganggetriebe mit einem Getriebeausgang verbunden. Der Verbrennungsmotor ist über ein Dreiganggetriebe mit einem Getriebeausgang verbunden, wobei die Getriebeausgänge durch eine gemeinsame Ausgangswelle gebildet sind, die mit einem Differential verbunden ist. Bei diesem Antriebskonzept können die beiden Getriebeanordnungen unabhängig voneinander geschaltet werden, und im Rahmen der verfügbaren Gänge können die Drehzahlen des Verbrennungsmotors und der elektrischen Maschine unabhängig voneinander gewählt werden.

Ferner ist vorgesehen, dass die Spitzenleistung des Elektromotors wenigstens 30 %, insbesondere mindestens 100 % der Nennleistung des Verbrennungsmotors beträgt. Als besonders bevorzugt wird angesehen, wenn die Dauerleistung des Elektromotors etwa 80 % der Nennleistung des Verbrennungsmotors beträgt oder mehr.

Hierdurch soll es möglich sein, mit dem Elektromotor eine vollwertige Fahrfunktion darzustellen. Insbesondere ist hier vorgesehen, dass die dreistufige Getriebeanordnung, die mit dem Verbrennungsmotor verbunden ist, eine erste Gangstufe in Form einer Anfahrgangstufe, eine zweite Gangstufe in Form einer Höchstgeschwindigkeits-Gangstufe und eine dritte Gangstufe als Effizienzgangstufe aufweist. Die Zweigang-Getriebeanordnung, die mit der elektrischen Maschine verbunden ist, soll eine erste Gangstufe als Dynamikgangstufe mit kurzer Übersetzung und eine zweite Gangstufe als Höchstgeschwindigkeits-Gangstufe aufweisen.

In einer Variante ist vorgesehen, die Ausgangswelle der elektrischen Maschine und die Ausgangswelle des Verbrennungsmotors über eine Zwischenwelle miteinander zu verbinden, um ein Standladen zu ermöglichen. In einer dritten Variante ist vorgesehen, eine als Anfahr- und Berggang ausgeführte erste Gangstufe des Verbrennungsmotors über eine Mitnutzung des elektromotorischen Teilgetriebes darzustellen.

Vor diesem Hintergrund ist es eine Aufgabe der Erfindung, einen verbesserten Hybrid-Antriebsstrang sowie verbesserte Verfahren zum Betreiben eines Hybrid-Antriebsstranges anzugeben.

Die Aufgabe wird durch einen Hybrid-Antriebsstrang der eingangs genannten Art gelöst, wobei der erste und der zweite Getriebeeingang über eine Kupplung miteinander verbindbar oder voneinander trennbar sind.

Mit dem erfindungsgemäßen Hybrid-Antriebsstrang lässt sich wenigstens einer der folgenden Vorteile erzielen. Zum einen kann der Antriebsstrang mit nur einer elektrischen Maschine realisiert werden. Die Reichweite des Antriebsstranges lässt sich erhöhen, ohne die Batterie zu vergrößern. Im Idealfall lässt sich sogar eine kleinere Batterie verwenden als im Stand der Technik. Es können Verluste in den Getriebeanordnungen minimiert werden. Der Antriebsstrang kann mit einer geringen Baugröße realisiert werden. Bei Schaltvorgängen in einer Getriebeanordnung kann zur Vermeidung von Zugkraftunterbrechungen Antriebsleistung über die andere Getriebeanordnung übertragen werden, so dass der Komfort erhöht ist. Zumindest eine der Antriebseinheiten kann bei geschlossener Kupplung nicht nur die Gangstufen der dieser Antriebseinheit zugeordneten Getriebeanordnung verwenden, sondern auch die Gangstufen der anderen Getriebeanordnung. Dies gilt insbesondere für den Verbrennungsmotor, der vorzugsweise sämtliche Gangstufen beider Getriebeanordnungen verwenden kann.

Ferner ist ein Standladen auf vergleichsweise einfache Weise realisierbar. Zudem ergibt sich insgesamt ein hoher Wirkungsgrad. Auch ein Boost-Betrieb ist realisierbar, bei dem die Antriebsleistung der ersten und der zweiten Antriebseinheit summiert werden. Der Antriebsstrang ist nur mittels der ersten Antriebseinheit oder nur mittels der zweiten Antriebseinheit antreibbar.

Die erste Antriebseinheit weist vorzugsweise eine elektrische Maschine auf. Die zweite Antriebseinheit weist vorzugsweise einen Verbrennungsmotor auf. Die Antriebseinrichtungen der Antriebseinheit können Wellen sein, wie eine Kurbelwelle eines Verbrennungsmotors oder eine Motorwelle einer elektrischen Maschine. Die Antriebseinrichtungen können jedoch auch Radsätze aufweisen, über die eine erste Übersetzungsanpassung hin zu dem jeweiligen Getriebeeingang realisiert wird.

Die Getriebeanordnungen sind vorzugsweise als Stirnradgetriebe realisiert. Die Abtriebseinrichtung kann einen Abtriebsradsatz oder -radsätze und ein mechanisches Differential beinhalten. Die Abtriebseinrichtung kann ferner eine Leistungsverzweigung für einen Vierradantrieb beinhalten.

Die Kupplung kann als Klauenkupplung realisiert sein. Die Kupplung kann jedoch auch als Synchron-Schaltkupplung realisiert sein. Alternativ ist es möglich, die Kupplung als Reibkupplung zu realisieren, die auch schlupfend betrieben werden kann, beispielsweise als nasslaufende Lamellenkupplung oder als trockene Reibkupplung.

Der Antriebsstrang kann für den Front-Quer-Einbau in einem Kraftfahrzeug ausgelegt sein, kann jedoch auch für eine Längsbauweise ausgelegt sein.

Die elektrische Maschine kann elektromotorische Antriebsleistung bereitstellen. Vorzugsweise kann die elektrische Maschine jedoch auch im Generatorbetrieb betrieben werden, um einen elektrischen Energiespeicher aufzuladen.

Die Aufgabe wird somit vollkommen gelöst.

Gemäß einer besonders bevorzugten Ausführungsform weist die erste Getriebeanordnung wenigstens eine erste schaltbare Gangstufe auf.

Unter einer schaltbaren Gangstufe wird vorliegend verstanden, dass die Gangstufe ein- und ausgelegt werden kann, die zugehörige Getriebeanordnung also auch in einen Neutralzustand versetzt werden kann. Vorzugsweise weist die erste Getriebeanordnung zwei oder weniger Gangstufen auf.

Gemäß einer besonders bevorzugten Ausführungsform ist die erste schaltbare Gangstufe der ersten Getriebeanordnung eine Anfahrgangstufe des Antriebsstranges.

Bei geschlossener Kupplung kann Antriebsleistung von der ersten Antriebseinheit und von der zweiten Antriebseinheit zum Anfahren über die Anfahrgangstufe geleitet werden.

Generell ist es möglich, dass keine der Getriebeanordnungen eine durch einen Radsatz realisierte Rückwärtsgangstufe aufweist. In diesem Fall wird ein Rückwärtsfahrbetrieb ausschließlich mittels der elektrischen Maschine realisiert, die auch in Rückwärtsdrehrichtung angetrieben werden kann.

Von besonderem Vorzug ist es jedoch, wenn die erste Getriebeanordnung eine Rückwärtsgangstufe aufweist. In diesem Fall ist es möglich, über die erste Antriebseinheit einen Rückwärtsfahrbetrieb einzurichten. Vorzugsweise ist es auch möglich, einen Rückwärtsfahrbetrieb mittels der zweiten Antriebseinheit oder mittels beider Antriebseinheiten einzurichten.

Ferner ist es insgesamt vorteilhaft, wenn die zweite Getriebeanordnung wenigstens zwei schaltbare Gangstufen aufweist.

Hierdurch kann auch ein verbrennungsmotorischer Betrieb über einen großen Geschwindigkeitsbereich realisiert werden.

Von besonderem Vorteil ist es, wenn die von der ersten Getriebeanordnung einrichtbare Übersetzung bzw. einrichtbaren Übersetzungen und die von der zweiten Getriebeanordnung einrichtbare Übersetzung bzw. einrichtbaren Übersetzungen unterschiedlich sind.

Hierdurch ist es möglich, eine größere Spreizung zu realisieren. Dies gilt insbesondere dann, wenn beispielsweise die zweite Antriebseinheit sowohl Übersetzungen der ersten als auch der zweiten Getriebeanordnung verwenden kann.

Von besonderem Vorzug ist es, wenn sich die von den zwei Getriebeanordnungen einrichtbaren Übersetzungen ergänzen, wobei die erste Getriebeanordnung vorzugsweise eine erste Gangstufe in Form einer Anfahrgangstufe beinhaltet, wobei die zweite Getriebeanordnung vorzugsweise eine zweite Gangstufe beinhaltet. Ferner kann die erste Getriebeanordnung vorzugsweise eine zweite oder eine dritte Gangstufe aufweisen, und die zweite Getriebeanordnung kann vorzugsweise statt einer zweiten auch eine dritte Gangstufe aufweisen. Ferner kann die zweite Getriebeanordnung eine vierte Gangstufe aufweisen.

Vorzugsweise ist die Gesamtanzahl der Übersetzungen für den Vorwärtsfahrbetrieb, die mittels der ersten und der zweiten Getriebeanordnung einrichtbar ist, kleiner gleich 4, insbesondere kleiner gleich 3.

Gemäß einer weiteren insgesamt vorteilhaften Ausführungsform weist die erste Antriebseinheit genau eine elektrische Maschine auf, wobei die zweite Antriebseinheit einen Verbrennungsmotor und keine elektrische Maschine aufweist.

Bei dieser Ausführungsform weist der Antriebsstrang vorzugsweise genau zwei Antriebseinheiten auf, nämlich eine elektrische Maschine der ersten Antriebseinheit und einen Verbrennungsmotor der zweiten Antriebseinheit. Da bei diesem Antriebsstrang insbesondere keine zweite elektrische Maschine notwendig ist, kann das Gesamtgewicht des Antriebsstranges deutlich reduziert werden.

Ferner ist es vorteilhaft, wenn der Antriebsstrang einen elektrischen Energiespeicher für eine elektrische Maschine aufweist, dessen Kapazität kleiner ist als 20 kWh, insbesondere kleiner als 15 kWh, und vorzugsweise kleiner als 10 kWh.

Bei einem Antriebsstrang der erfindungsgemäßen Art lässt sich insbesondere bei Durchführung von einem der nachstehend noch zu beschreibenden erfindungsgemäßen Verfahren ein Energiespeicher von derart kleiner Größe verwenden, so dass das Gesamtgewicht des Kraftfahrzeuges deutlich reduziert werden kann.

Der elektrische Energiespeicher ist vorzugsweise ein Lithium-basierter Energiespeicher, wie ein Lithiumionen-Energiespeicher, oder ein vergleichbarer Energiespeicher mit einer hohen Leistungsdichte.

Die Leistungen der ersten und der zweiten Antriebseinheit können gleich groß sein. Die Maximalleistung der zweiten Antriebseinheit kann größer sein als jene der ersten Antriebseinheit.

Von besonderem Vorzug ist es jedoch auch für den Fall, dass der erste und der zweite Getriebeeingang nicht über eine Kupplung miteinander verbindbar oder voneinander trennbar sind, wenn die erste Antriebseinheit eine elektrische Maschine aufweist, die eine erste Maximalleistung besitzt, wobei die zweite Antriebseinheit einen Verbrennungsmotor aufweist, der eine zweite Maximalleistung besitzt, wobei die erste Maximalleistung größer ist als die zweite Maximalleistung, insbesondere größer als das 1,5-fache der zweiten Maximalleistung, und vorzugsweise größer als das 2,5-fache der zweiten Maximalleistung, und besonders bevorzugt größer ist als das 5-fache der zweiten Maximalleistung.

In bevorzugten Varianten kann die erste Maximalleistung der elektrischen Maschine größer sein als das 8-fache der zweiten Maximalleistung.

Bei dieser Ausführungsform wird eine im Vergleich zum Verbrennungsmotor vergleichsweise starke elektrische Maschine verwendet, was insbesondere mit den nachstehend noch beschriebenen erfindungsgemäßen Verfahren von besonderem Vorzug ist.

Mittels einer derart relativ starken elektrischen Maschine können vergleichsweise hohe Beschleunigungen bei hohem Wirkungsgrad erzielt werden, was bei Verbrennungsmotoren vergleichbarer Leistung nicht möglich ist. Der Verbrennungsmotor wird bei einem derartigen Antriebsstrang vorzugsweise für einen stationären Betrieb verwendet, insbesondere bei höheren Geschwindigkeiten. Bei niedrigeren Geschwindigkeiten, bei denen ein häufiges Beschleunigen und Abbremsen notwendig ist, wie beispielsweise im Stadtverkehr, wird hingegen bevorzugt die elektrische Maschine verwendet.

In einer ersten bevorzugten Ausführungsform ist die zweite Antriebseinrichtung fest mit dem zweiten Getriebeeingang verbunden. Bei dieser Ausführungsform kann der Antriebsstrang kompakt und mit wenigen aufwändigen Baugruppen realisiert werden. Im Falle der Realisierung der zweiten Antriebseinheit mittels eines Verbrennungsmotors ist folglich die Kurbelwelle fest mit dem zweiten Getriebeeingang verbunden. Unter einer festen Verbindung soll sowohl eine koaxiale Verbindung einer Welle der zweiten Antriebseinrichtung mit einer Welle des zweiten Getriebeeinganges verstanden werden, jedoch auch eine Verbindung über eine nichtschaltbare Radsatzanordnung, insbesondere in Form einer Stirnradsatzanordnung.

Gemäß einer alternativen Ausführungsform ist die zweite Antriebseinrichtung über eine weitere Kupplung mit dem zweiten Getriebeeingang verbunden.

Bei dieser Variante kann die zweite Antriebseinheit über die weitere Kupplung von dem restlichen Teil des Antriebsstranges abgekoppelt werden. Dies ermöglicht es, dass die erste Antriebseinheit nicht nur die Gangstufen der zugeordneten ersten Getriebeanordnung verwenden kann, sondern auch Gangstufen der zweiten Getriebeanordnung, da in diesem Fall die zweite Antriebseinheit, die vorzugsweise einen Verbrennungsmotor aufweist, nicht mitgeschleppt werden muss.

Bei dieser Variante ist es bevorzugt, wenn zum Schließen der ersten Kupplung auch die weitere Kupplung geschlossen wird.

Die Anordnung der Antriebseinheiten ist vorzugsweise so, dass deren Antriebswellen parallel zueinander ausgerichtet sind. Auf diese Weise kann eine einfache Anbindung an ein Stirnradgetriebe erfolgen.

Die Antriebseinheiten weisen jeweils vorzugsweise Gangstufen auf, die durch ein Losrad und ein Festrad gebildet sind, wobei das Losrad mittels einer zugeordneten Schaltkupplung mit einer zugehörigen Welle verbindbar ist, wobei die Schaltkupplung als Klauenkupplung oder als Synchron-Schaltkupplung ausgebildet sein kann.

Die Getriebeanordnungen weisen bei dieser Variante vorzugsweise jeweils ausschließlich eine Getriebeeingangswelle und eine Getriebeausgangswelle auf. Eine Antriebswelle der zweiten Antriebseinrichtung ist dabei vorzugsweise koaxial zu einer Getriebeeingangswelle ausgerichtet. Die Verbindung mit der Getriebeeingangswelle kann dabei fest sein, wie oben beschrieben, kann jedoch auch einen Torsionsdämpfer oder dergleichen beinhalten.

Die Losräder der Gang-Radsätze können an der Getriebeeingangswelle angeordnet sein. In diesem Fall sind auch die zugeordneten Schaltkupplungen an der Getriebeeingangswelle angeordnet. Die Losräder und Schaltkupplungen können jedoch auch an der jeweiligen Getriebeausgangswelle angeordnet sein.

Die elektrische Maschine kann parallel versetzt zu einer Kurbelwelle des Verbrennungsmotors angeordnet sein. In einer bevorzugten Variante ist die elektrische Maschine koaxial zu einer Kurbelwelle des Verbrennungsmotors angeordnet.

In diesem Fall ist es von Vorzug, wenn die erste Antriebseinrichtung eine Hohlwelle aufweist, wobei die zweite Antriebseinrichtung eine Innenwelle aufweist, die sich durch die Hohlwelle hindurch erstreckt.

Bei dieser Ausführungsform ist ein Rotor der elektrischen Maschine vorzugsweise mit der Hohlwelle verbunden, und die Innenwelle ist vorzugsweise fest oder über eine weitere Kupplung mit dem Verbrennungsmotor verbunden.

Eine Getriebeeingangswelle der ersten Getriebeanordnung ist in diesem Fall vorzugsweise ebenfalls als Hohlwelle ausgebildet, die mit der Hohlwelle der ersten Antriebseinrichtung fest verbunden ist. In diesem Fall können ein oder mehrere Räder von Gang-Radsätzen der ersten Getriebeanordnung an dieser Hohlwellenanordnung gelagert sein. Eine Getriebeeingangswelle der zweiten Getriebeanordnung ist dabei vorzugsweise ebenfalls als Innenwelle ausgebildet, die mit der Innenwelle der zweiten Antriebseinrichtung fest verbunden ist und sich durch die Hohlwelle der ersten Getriebeanordnung hindurch erstreckt.

Bei dieser Variante kann ein insbesondere radial kompakter Aufbau realisiert werden. Bei dieser Variante eines Hybrid-Antriebsstranges ist ferner die erste Kupplung vorzugsweise in axialer Richtung zwischen der ersten und der zweiten Antriebseinheit angeordnet. Gleiches gilt für die weitere Kupplung, sofern eine derartige vorhanden ist.

In einer alternativen Variante sind eine Getriebeeingangswelle der ersten Getriebeanordnung und eine Getriebeeingangswelle der zweiten Getriebeanordnung als Vollwellen ausgebildet, die koaxial zueinander angeordnet sind und aufeinander zu weisen, wobei die Kupplung in axialer Richtung dazwischen angeordnet ist.

Bei beiden Varianten kann die erste Antriebseinrichtung ein Antriebsrad aufweisen, das mit einer Antriebswelle der ersten Antriebseinheit verbunden ist und fest mit einem weiteren Rad in Eingriff steht, insbesondere einem Rad der ersten Getriebeanordnung, und zwar vorzugsweise mit jenem Rad, das der ersten schaltbaren Gangstufe zugeordnet ist.

Ferner ist es bei beiden Varianten möglich, dass der erste und der zweite Getriebeausgang eine gemeinsame Ausgangswelle aufweisen.

Mit anderen Worten können der erste und der zweite Getriebeausgang, die vorzugsweise in axialer Richtung nebeneinander liegen, fest miteinander verbunden sein, so dass diese eine gemeinsame Ausgangswelle bilden, die mit der Abtriebseinrichtung verbunden ist.

Der oben beschriebene erfindungsgemäße Antriebsstrang lässt sich auf verschiedene Art und Weise vorteilhaft ansteuern, derart, dass der Antriebsstrang nur einen relativ kleinen elektrischen Energiespeicher benötigt, wobei dennoch eine hohe Reichweite erzielbar ist. Manche der nachstehend beschriebenen erfindungsgemäßen Verfahren lassen sich auch dann anwenden, wenn der erste und der zweite Getriebeeingang nicht über eine Kupplung sondern fest miteinander verbunden sind.

Ein erstes erfindungsgemäßes Verfahren zum Ansteuern eines Antriebsstranges beinhaltet die Schritte, die zweite Antriebseinheit in einem ersten Betriebsmodus während der Fahrt so anzusteuern, dass die zweite Antriebseinheit zumindest oberhalb eines ersten Schwellenwertes der Geschwindigkeit des Kraftfahrzeuges eine Antriebsleistung bereitstellt, die dem Rollwiderstand des Fahrzeugs und dem Luftwiderstand des Fahrzeugs bei der jeweiligen Geschwindigkeit entspricht.

Der Fahrwiderstand eines Kraftfahrzeuges beinhaltet generell den Rollwiderstand, den Luftwiderstand sowie einen Beschleunigungswiderstand und einen Steigungswiderstand. Die Summe dieser Widerstände ist während der Fahrt durch Antriebsleistung auszugleichen.

Die Grundidee dieses Aspektes eines erfindungsgemäßen Verfahrens beinhaltet folglich, die zweite Antriebseinheit, die vorzugsweise den Verbrennungsmotor aufweist, im Wesentlichen dazu zu verwenden, um den Rollwiderstand und den Luftwiderstand des Fahrzeugs auszugleichen. Insbesondere der Luftwiderstand hängt in starkem Maße (quadratisch) von der Geschwindigkeit des Fahrzeuges ab. Demzufolge stellt die zweite Antriebseinheit bei höherer Geschwindigkeit generell eine höhere Antriebsleistung bereit, um diese Widerstände auszugleichen. Der Rollwiderstand und der Luftwiderstand sind dabei im stationären Betrieb des Fahrzeugs im Wesentlichen konstant. Daher kann die zweite Antriebseinheit über eine geeignete Übersetzung vorzugsweise in einem wirkungsgradoptimalen Betriebspunkt betrieben werden, insbesondere dann, wenn dieser Widerstandsausgleich nur oberhalb eines ersten Schwellenwertes der Geschwindigkeit des Kraftfahrzeuges stattfindet, der beispielsweise im Bereich von 60 bis 100 km/h liegen kann, insbesondere im Bereich von 70 bis 90 km/h.

In darunter liegenden Geschwindigkeitsbereichen ist der Fahrzustand des Kraftfahrzeuges zum einen nur selten stationär, da ein häufiges Beschleunigen und Abbremsen erforderlich ist, wie beispielsweise im Stadtverkehr. Zum anderen ist der relative Einfluss von Rollwiderstand und Luftwiderstand im unteren Geschwindigkeitsbereich deutlich geringer.

Im stationären Betrieb oberhalb des ersten Geschwindigkeits-Schwellenwertes kann die erste Antriebseinheit (insbesondere eine elektrische Maschine) folglich über längere Zeit abgeschaltet werden, so dass der elektrische Energiespeicher nicht dauerhaft belastet wird.

In Abhängigkeit vom Ladezustand kann der Verbrennungsmotor dabei zusätzlich zu dem Roll- und dem Luftwiderstand zusätzliche Antriebsleistung zum Betreiben der elektrischen Maschine im Generatorbetrieb bereitstellen (Rekuperationsleistung). Folglich kann während eines stationären Fahrbetriebes der elektrische Energiespeicher immer in einem vollständig geladenen Zustand gehalten werden, so dass das Abrufen von Antriebsleistung aus der ersten Antriebseinheit vorzugsweise jederzeit möglich ist.

Gemäß einem weiteren Aspekt eines erfindungsgemäßen Ansteuerungsverfahrens weist die erste Antriebseinheit eine elektrische Maschine auf, wobei das Verfahren die Schritte beinhaltet, die erste Antriebseinheit in einem ersten Betriebsmodus während der Fahrt so anzusteuern, dass die erste Antriebseinheit oberhalb eines ersten Schwellenwertes der Geschwindigkeit des Kraftfahrzeuges eine für eine angeforderte positive Beschleunigung erforderliche motorische Antriebsleistung bereitstellt und/oder zumindest einen Teil einer für eine angeforderte negative Beschleunigung erforderlichen Bremsleistung im Generatorbetrieb bereitstellt.

Wenn folglich ausgehend von einer stationären Fahrt, bei der die Antriebsleistung im Wesentlichen durch die zweite Antriebseinheit bereitgestellt wird, ein Beschleunigungswunsch seitens des Fahrers erfolgt, so wird dieser durch das Bereitstellen von Antriebsleistung mittels der ersten Antriebseinheit in Form einer elektrischen Maschine erfüllt. Ferner kann bei negativen Beschleunigungswünschen die erforderliche Bremsleistung zumindest zum Teil dadurch erfüllt werden, dass die elektrische Maschine im Generatorbetrieb rekuperierend arbeitet.

Da insbesondere die für positive Beschleunigungen erforderliche Antriebsleistung bei diesem Aspekt eines erfindungsgemäßen Verfahrens von der elektrischen Maschine bereitgestellt wird, kann die zweite Antriebseinheit (die vorzugsweise den Verbrennungsmotor aufweist), vergleichsweise klein dimensioniert werden. Denn der Beschleunigungswiderstand kann zumindest in einem mittleren Geschwindigkeitsbereich (oberhalb des ersten Geschwindigkeits-Schwellenwertes und deutlich unterhalb einer Höchstgeschwindigkeit des Fahrzeuges) deutlich höher sein als die Summe von Rollwiderstand und Luftwiderstand. Demzufolge ist es gerechtfertigt, die elektrische Maschine mit einer relativ hohen Maximalleistung zu realisieren, die deutlich höher ist als die Maximalleistung des Verbrennungsmotors.

Es versteht sich dabei, dass die elektrische Maschine der ersten Antriebseinheit bevorzugt auch in einem Geschwindigkeitsbereich unterhalb des ersten Geschwindigkeits-Schwellenwertes zumindest überwiegend als alleinige Antriebsquelle verwendet wird. Denn in derartigen Geschwindigkeitsbereichen ist es häufig notwendig, das Fahrzeug zu beschleunigen oder abzubremsen, wobei in diesem Geschwindigkeitsbereich die elektrische Maschine mit einem deutlich höheren Wirkungsgrad Beschleunigungsleistung bereitstellen kann als der Verbrennungsmotor.

Zudem kann in diesem Geschwindigkeitsbereich die Bremsleistung zumindest überwiegend von der elektrischen Maschine im Generatorbetrieb bereitgestellt werden, so dass ein elektrischer Energiespeicher in diesem Geschwindigkeitsbereich nicht nur kurzfristig entladen wird (bei Beschleunigungen), sondern auch wieder geladen wird (beim Bremsen).

Mit anderen Worten kann in diesem unteren Geschwindigkeitsbereich die zum Beschleunigen aufgewendete Energie zumindest teilweise wieder zurückgewonnen werden, so dass der Energiespeicher gar nicht oder nur relativ wenig entladen wird, auch wenn das Kraftfahrzeug über längere Zeit in dem unteren Geschwindigkeitsbereich betrieben wird.

Bei den oben genannten Aspekten des erfindungsgemäßen Verfahrens ist es bevorzugt, wenn die erste und/oder die zweite Antriebseinheit so angesteuert wird, dass diese in einem ersten Betriebsmodus während der Fahrt eine motorische Antriebsleistung bereitstellt, die einem positiven Steigungswiderstand entspricht.

Wenn das Fahrzeug beispielsweise ausgehend von einem stationären Betrieb von einer Fahrt in der Ebene in eine Fahrt an einer ansteigenden Steigung übergeht, ist es bevorzugt, wenn die hierfür erforderliche Antriebsleistung (die dem jeweiligen Steigungswiderstand entspricht) von der zweiten Antriebseinheit bereitgestellt wird. In Abhängigkeit von dem Ladezustand des elektrischen Energiespeichers kann es jedoch auch gewünscht oder vorteilhaft sein, diese Antriebsleistung durch die erste Antriebseinheit oder im Hybrid-Antrieb bereitzustellen.

Dieses Verfahren wird insbesondere in dem Geschwindigkeitsbereich oberhalb des ersten Geschwindigkeits-Schwellenwertes angewendet.

In entsprechender Weise ist es bevorzugt, wenn die erste Antriebseinheit eine elektrische Maschine aufweist und wenn die erste Antriebseinheit so angesteuert wird, dass diese in einem ersten Betriebsmodus während der Fahrt eine Generatorleistung bereitstellt, die zumindest einem Teil eines negativen Steigungswiderstandes entspricht.

Für diesen Fall, wenn das Fahrzeug "bergab" fährt, kann zum Halten der Geschwindigkeit die elektrische Maschine im Generatorbetrieb betrieben werden, um den negativen Steigungswiderstand auszugleichen.

Die oben beschriebenen Aspekte von erfindungsgemäßen Verfahren betreffen einen ersten Betriebsmodus, bei dem automatisch Antriebsleistung entweder von der ersten Antriebseinheit und/oder von der zweiten Antriebseinheit bereitgestellt wird. Der Grundgedanke besteht darin, den Verbrennungsmotor im Wesentlichen in einem oberen Geschwindigkeitsbereich zur Überwindung des Roll- und des Luftwiderstandes (und gegebenenfalls des Steigungswiderstandes) zu verwenden, und dynamische Fahrwünsche durch die elektrische Maschine zu erfüllen.

Gemäß einer weiteren bevorzugten Variante der oben beschriebenen Aspekte von erfindungsgemäßen Verfahren weist die erste Antriebseinheit eine elektrische Maschine auf, wobei die zweite Antriebseinheit einen Verbrennungsmotor aufweist, und wobei der Antriebsstrang in einem zweiten Betriebsmodus so angesteuert wird, dass Antriebsleistung und/oder Bremsleistung nur von der ersten Antriebseinheit bereitgestellt werden.

In diesem rein elektrischen Fahrbetrieb wird der Verbrennungsmotor abgeschaltet, und die elektrische Maschine fährt entweder ausschließlich über die zugeordnete erste Getriebeanordnung. Für den Fall, dass eine weitere Kupplung vorhanden ist, die den Verbrennungsmotor abkoppeln kann, kann in diesem Betriebsmodus auch die zweite Getriebeanordnung verwendet werden.

Der zweite Betriebsmodus ist vorzugsweise ein Betriebsmodus unterhalb eines ersten Geschwindigkeits-Schwellenwertes.

Gemäß einer weiteren bevorzugten Ausführungsform der oben genannten Aspekte von erfindungsgemäßen Verfahren weist die erste Antriebseinheit eine elektrische Maschine auf, wobei die zweite Antriebseinheit einen Verbrennungsmotor aufweist und wobei der Antriebsstrang in einem dritten Betriebsmodus so angesteuert wird, dass Antriebsleistung von der ersten Antriebseinheit und von der zweiten Antriebseinheit bereitgestellt wird und dass Bremsleistung von der ersten Antriebseinheit im Generatorbetrieb bereitgestellt wird.

In diesem "Hybridmodus" zur Bereitstellung von Antriebsleistung lassen sich die Antriebsleistungen der ersten und der zweiten Antriebseinheit im Wesentlichen addieren, so dass für den Fahrer ein Fahrbetrieb erfahrbar ist, der von einer stärkeren elektrischen Maschine ausgeht. Mit anderen Worten kann in diesem dritten Betriebsmodus der Verbrennungsmotor zum "Boosten" der elektrischen Maschine verwendet werden, wenn positive Antriebsleistung gefordert ist. Negative Antriebsleistung wird in jedem Fall bevorzugt von der elektrischen Maschine bereitgestellt, da diese zum Aufladen des elektrischen Energiespeichers verwendet werden kann, wobei es bevorzugt ist, den Verbrennungsmotor hierbei über die zweite Getriebeanordnung abzukoppeln.

Bei sämtlichen oben genannten Verfahren ist es möglich, für den Fall, dass die erste oder die zweite Getriebeanordnung mehrere Gangstufen aufweist, bei Gangwechseln in einer Getriebeanordnung eine zugkraftunterstützende bzw. eine abstützende Antriebskraft über den anderen Antriebszweig bereitzustellen, so dass ein komfortabler Fahrbetrieb im Wesentlichen ohne Zugkraftunterbrechung in nahezu sämtlichen Betriebsmodi erzielbar ist.

Gemäß einem weiteren bevorzugten Aspekt eines erfindungsgemäßen Verfahrens weist die erste Antriebseinheit eine elektrische Maschine auf, wobei die zweite Antriebseinheit einen Verbrennungsmotor aufweist und wobei der Antriebsstrang in zumindest einem Betriebsmodus eines Normalbetriebs des Antriebsstranges während der Fahrt so angesteuert wird, dass die zweite Antriebseinheit unterhalb eines zweiten Schwellenwertes der Geschwindigkeit des Kraftfahrzeuges stillgelegt wird und nur die erste Antriebseinheit Antriebsleistung bereitstellt.

Der zweite Schwellenwert kann dabei identisch zu dem ersten Schwellenwert sein, kann jedoch auch kleiner als der erste Schwellenwert sein.

Gemäß einem weiteren Aspekt eines erfindungsgemäßen Verfahrens weist die erste Antriebseinheit eine elektrische Maschine auf, wobei die zweite Antriebseinheit einen Verbrennungsmotor aufweist, wobei der Antriebsstrang zwischen einem Normalbetrieb mit wenigstens einem Betriebsmodus und einem Hilfsbetrieb umschaltbar ist, wobei das Umschalten in den Hilfsbetrieb in Abhängigkeit von einem Ladezustand eines elektrischen Energiespeichers des Antriebsstranges erfolgt und wobei in dem Hilfsbetrieb nur die zweite Antriebseinheit Antriebsleistung bereitstellt.

Für die meisten Fahrprofile ist es möglich, während des Fahrbetriebs einen elektrischen Energiespeicher in einem zumindest teilweise geladenen Zustand zu halten. In wenigen Ausnahmefällen ist es möglich, dass der elektrische Energiespeicher einen Ladezustand hat, der unterhalb eines vorbestimmten Lade-Schwellenwertes ist, so dass es nicht mehr gewünscht ist, weitere Antriebsleistung über die elektrische Maschine bereitzustellen.

in diesem Fall wird der Hilfsbetrieb eingerichtet, bei dem Antriebsleistung nur mittels des Verbrennungsmotors bereitgestellt wird. In diesem Hilfsbetrieb kann es insbesondere dann, wenn der Verbrennungsmotor eine deutlich geringere Leistung hat als die elektrische Maschine, sein, dass der Fahrbetrieb für den Fahrer deutlich weniger dynamisch erfolgen kann, was dem Fahrer gegebenenfalls angezeigt wird. Mit anderen Worten wird der Fahrer in einem solchen Hilfsbetrieb davon ausgehen, dass er momentan keine dynamischen Beschleunigungen durchführen kann.

In sämtlichen Varianten der oben genannten Verfahren ist es bevorzugt, wenn zum Anfahren des Kraftfahrzeuges Antriebsleistung sowohl von der elektrischen Maschine als auch von dem Verbrennungsmotor bereitgestellt wird, wobei die Kupplung in diesem Fall geschlossen wird.

Ferner ist es in sämtlichen Varianten bevorzugt, wenn der Verbrennungsmotor sämtliche in den Getriebeanordnungen zur Verfügung stehenden Gangstufen nützen kann, wobei die elektrische Maschine zumindest dann, wenn keine weitere Kupplung vorhanden ist, generell nur die Gangstufen der zugeordneten ersten Getriebeanordnung nutzen kann.

Ferner ist es in sämtlichen Varianten bevorzugt, wenn die Abstufungen und Übersetzungen der Getriebeanordnungen so gewählt sind, dass das Fahrzeug nur mit der ersten Antriebseinheit oder nur mit der zweiten Antriebseinheit über den gesamten Geschwindigkeitsbereich bewegt werden kann, also vom Anfahren bis hin zur Höchstgeschwindigkeit.

In einer bevorzugten Variante ist der Verbrennungsmotor direkt mit der zugeordneten zweiten Getriebeanordnung verbunden. In diesem Fall kann die elektrische Maschine das benötigte Radmoment bei Schaltungen liefern, so dass vergleichsweise lange Schaltzeiten in der zweiten Getriebeanordnung realisierbar sind.

Von besonderem Vorzug ist es, wenn die elektrische Maschine zur Bereitstellung von Beschleunigungsleistung genutzt wird, wohingegen der Rollwiderstand, der Luftwiderstand und gegebenenfalls der Steigungswiderstand vorzugsweise über den Betrieb der zweiten Antriebseinheit in Form eines Verbrennungsmotors überwunden werden.

Bei sämtlichen oben beschriebenen Varianten ist es vorteilhaft, wenn folglich eine elektrische Fortbewegung auch ohne Einsatz des Verbrennungsmotors nach einer Fahrtstrecke möglich ist, die größer ist als die rein elektrische Reichweite. Damit ist gemeint, dass insbesondere in dem ersten Betriebsmodus durch die Verwendung des Verbrennungsmotors im stationären Betrieb die Batterie geschont wird. Hierdurch kann bei einem Fahrprofil, bei dem zunächst ein Stadtverkehr, dann eine Autobahnfahrt und dann wieder ein Stadtverkehr erfolgt, gewährleistet werden, dass auch am Ankunftsort im Stadtverkehr rein elektrisch gefahren werden kann (vorzugsweise unterhalb des ersten Geschwindigkeits-Schwellenwertes $v_S$).

Das erfindungsgemäße Antriebskonzept ist eine Art Range-Extender-Konzept, jedoch mit nur einer elektrischen Maschine ohne zusätzlichen Generator.

Insbesondere in dem ersten Betriebsmodus, bei dem der Verbrennungsmotor im Wesentlichen in einem oberen Geschwindigkeitsbereich zur Überwindung des Roll- und des Luftwiderstandes verwendet wird, kann ein elektrischer Energiespeicher mit folgender Strategie geladen werden:

Zum einen wird vorgesehen, dass der Verbrennungsmotor auf positive oder negative Beschleunigungen träge reagiert. Demzufolge muss der Verbrennungsmotor hinsichtlich seines Lastpunktes immer wieder nachgezogen werden, um sich der neuen Fahrsituation, insbesondere den neuen Fahrwiderständen, anzupassen. Bei einer Reduzierung der Fahrwiderstände steht überschüssige Antriebsleistung zur Verfügung, die zum Laden der Batterie (des elektrischen Energiespeichers) verwendet werden kann.

Ferner ist es möglich, im stationären Betrieb den Lastpunkt des Verbrennungsmotors zu verschieben, im Idealfall in Richtung hin zu einem optimalen Betriebspunkt des Verbrennungsmotors (bei dem dieser mit einem besseren Wirkungsgrad arbeitet). Hierdurch kann die auf diese Weise bereitgestellte überschüssige Antriebsleistung zum Laden der Batterie verwendet werden.

Eine derartige kontinuierliche Lastpunktanhebung kann zum einen erfolgen, um den Verbrennungsmotor in einem besseren Wirkungsgradbereich zu betreiben. Zum anderen kann hierdurch eine sogenannte Nullmomentenregelung abgeschaltet werden.

Bei einer Nullmomentenregelung wird die elektrische Maschine so angesteuert, dass diese kein negatives Moment aufbringt, selbst wenn der Rotor in Drehung versetzt wird. Hierdurch kann beispielsweise ein sogenannter "Segel"-Betrieb eingerichtet werden.

Die hierbei entstehenden Verlustleistungen können insbesondere bei hohen Geschwindigkeiten im Bereich von einigen kW liegen. In diesem Fall kann der Verbrennungsmotor seinen Lastpunkt so verschieben, dass er diese Leistung zusätzlich aufbringt, um diese Leistung zum Rekuperieren (also zum Laden des elektrischen Antriebsspeichers) zu verwenden.

Dabei kann es bevorzugt sein, diese Abschaltung der Nullmomentenregelung nur dann durchzuführen, wenn der Ladezustand des elektrischen Energiespeichers einen Schwellenwert unterschreitet, beispielsweise 40 bis 50 % des maximalen Ladezustandes).

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine schematische Darstellung einer ersten Ausführungsform eines erfindungsgemäßen Hybrid-Antriebsstranges;

Fig. 2    eine schematische Darstellung einer weiteren Ausführungsform eines erfindungsgemäßen Hybrid-Antriebsstranges;

Fig. 3    ein Diagramm von Leistung über Geschwindigkeit mit Darstellung der von dem Verbrennungsmotor und der elektrischen Maschine an den angetriebenen Rädern bereitstellbaren Leistungen des Antriebsstranges der Fig. 2;

Fig. 4    eine Schalttabelle für den Antriebsstrang der Fig. 2;

Fig. 5    eine Modifikation des Antriebsstranges der Fig. 2;

Fig. 6    eine schematische Darstellung einer weiteren Ausführungsform eines erfindungsgemäßen Antriebsstranges;

Fig. 7    ein Diagramm von Leistung über Geschwindigkeit mit Darstellung der von dem Verbrennungsmotor und der elektrischen Maschine an den angetriebenen Rädern bereitstellbaren Leistungen des Antriebsstranges der Fig. 6;

Fig. 8    eine Schalttabelle für den Antriebsstrang der Fig. 6;

Fig. 9    ein Diagramm von Leistung über Geschwindigkeit mit Darstellung der verfügbaren Fahrzeugleistung und der zu überwindenden Widerstandsleistung;

Fig. 10    eine der Fig. 9 vergleichbare Darstellung von Fahrwiderstand und Antriebskraft über der Geschwindigkeit, zur Darstellung von verschiedenen Betriebsmodi der oben genannten Antriebsstränge;

Fig. 11    eine der Fig. 10 vergleichbare Darstellung zur Erläuterung eines weiteren Betriebsmodus der oben beschriebenen Antriebsstränge; und

Fig. 12    ein schematisches Blockdiagramm von Betriebszuständen der oben beschriebenen Antriebsstränge.

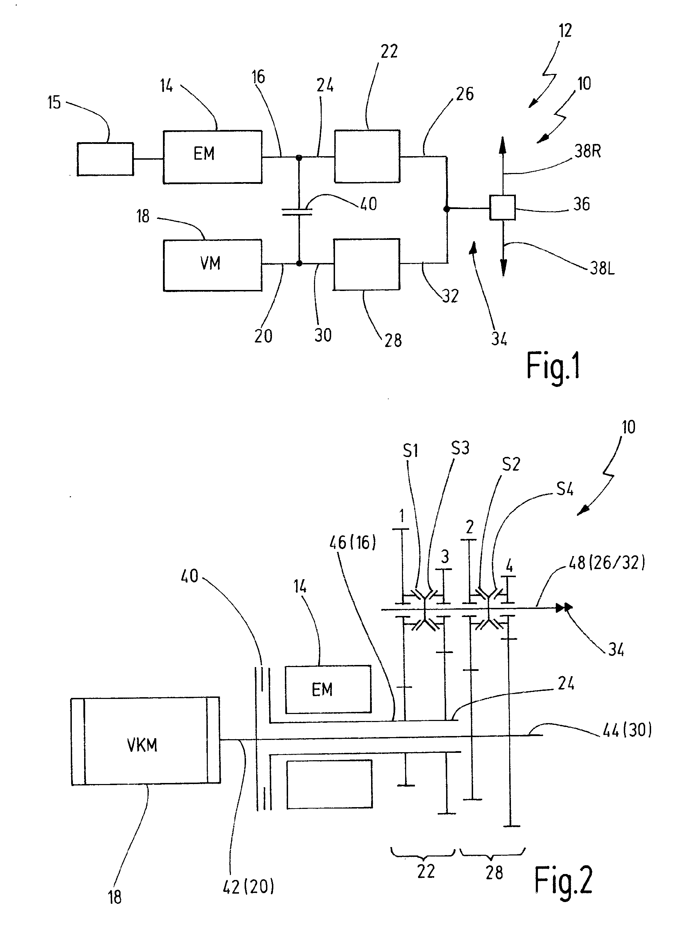

In Fig. 1 ist eine erste Ausführungsform eines erfindungsgemäßen Antriebsstranges in schematischer Form dargestellt und generell mit 10 bezeichnet. Der Antriebsstrang 10 dient zum Antrieb eines Kraftfahrzeuges 12 und weist eine erste Antriebseinheit 14 mit einer elektrischen Maschine EM auf. Die elektrische Maschine 14 ist, gegebenenfalls über eine geeignete Leistungselektronik, mit einem elektrischen Energiespeicher 15 verbunden. Die elektrische Maschine 14 kann sowohl elektromotorisch als auch generatorisch betrieben werden. Die erste Antriebseinheit 14 weist eine erste Antriebseinrichtung 16 auf, die beispielsweise in Form einer Welle oder einer Welle/Radsatzanordnung ausgebildet sein kann.

Ferner weist der Antriebsstrang 10 eine zweite Antriebseinheit 18 in Form eines Verbrennungsmotors VM auf, der eine zweite Antriebseinrichtung 20 aufweist, die in der Regel als Kurbelwelle ausgebildet ist.

Der Antriebsstrang 10 beinhaltet ferner eine erste Getriebeanordnung 22, die einen ersten Getriebeeingang 24 und einen ersten Getriebeausgang 26 aufweist. Ferner beinhaltet der Antriebsstrang 10 eine zweite Getriebeanordnung 28, die einen zweiten Getriebeeingang 30 und einen zweiten Getriebeausgang 32 aufweist. Die Getriebeausgänge 26, 32 sind miteinander verbunden und mit einer Abtriebseinrichtung 34 verbunden, die beispielsweise ein mechanisches Differential 36 aufweist, mittels dessen Antriebsleistung auf angetriebene Räder 38L, 38R des Kraftfahrzeugs 12 verteilbar ist.

Die erste Antriebseinrichtung 16 ist vorzugsweise fest mit dem ersten Getriebeeingang 24 verbunden. Ferner ist die zweite Antriebseinrichtung 20 vorzugsweise fest mit dem zweiten Getriebeeingang 30 verbunden.

Folglich kann Antriebsleistung über zwei parallele Leistungsstränge bereitgestellt werden, zum einen über die erste Antriebseinheit 14 und die erste Getriebeanordnung 22, und zum anderen über die zweite Antriebseinheit 18 und die zweite Getriebeanordnung 28.

Die erste Getriebeanordnung 22 weist vorzugsweise wenigstens eine schaltbare Gangstufe in Form einer Anfahrgangstufe auf, kann jedoch auch zwei schaltbare Gangstufen aufweisen. Die zweite Getriebeanordnung 28 weist vorzugsweise wenigstens eine, insbesondere zwei schaltbare Gangstufen auf. In der ersten Getriebeanordnung 22 kann gegebenenfalls zusätzlich eine Rückwärtsgangstufe implementiert sein.

Der Antriebsstrang 10 beinhaltet ferner eine Kupplung 40, die den ersten Getriebeeingang 24 und den zweiten Getriebeeingang 30 miteinander verbindet. Die Kupplung 40 kann als Klauenkupplung, als Synchron-Schaltkupplung oder als Reibkupplung ausgebildet sein.

Bei geöffneter Kupplung 40 kann der Antriebsstrang 10 einen rein elektromotorischen Fahrbetrieb über die ersten Antriebseinheit 14 einrichten oder einen rein verbrennungsmotorischen Fahrbetrieb über die zweite Antriebseinheit 18.

Da die elektrische Maschine EM der ersten Antriebseinheit 14 sich in einen Leerlaufzustand schalten lässt, bei dem der Rotor im Wesentlichen frei bewegt werden kann, ist es bei geschlossener Kupplung 40 möglich, verbrennungsmotorische Antriebsleistung von der ersten Antriebseinheit 14 über die Kupplung 40 auch auf den ersten Getriebeeingang 24 zu legen, so dass im verbrennungsmotorischen Betrieb auch Gangstufen der ersten Getriebeanordnung 22 verwendbar sind. Generell ist es zwar auch möglich, elektromotorische Antriebsleistung über die geschlossene Kupplung 40 auf den zweiten Getriebeeingang 30 zu führen. Hierbei wird jedoch in der Regel der Verbrennungsmotor mitgeschleppt, was den Wirkungsgrad verschlechtert, so dass diese Vorgehensweise nicht bevorzugt ist. Es ist jedoch möglich, den Verbrennungsmotor VM über eine weitere Kupplung mit dem zweiten Getriebeeingang 30 zu verbinden, was jedoch in Fig. 1 nicht dargestellt ist. In diesem Fall ist es möglich, den Verbrennungsmotor VM abzukoppeln, so dass auch im elektromotorischen Betrieb sämtliche Gangstufen der ersten und der zweiten Getriebeanordnung 22, 28 verwendbar sind.

Im Nachfolgenden werden weitere Ausführungsformen von erfindungsgemäßen Antriebssträngen beschrieben, die hinsichtlich Aufbau und Funktionsweise generell dem Antriebsstrang der Fig. 1 entsprechen. Gleiche Elemente sind daher durch gleiche Bezugszeichen gekennzeichnet. Im Folgenden werden im Wesentlichen die Unterschiede erläutert.

Fig. 1 zeigt eine bevorzugte Ausführungsform, bei der eine Kurbelwelle 42 des Verbrennungsmotors (VKM = VM) fest mit einer koaxial hierzu angeordneten Innenwelle 44 verbunden ist, die einen zweiten Getriebeeingang 30 bildet. Koaxial zu der Innenwelle 44 ist eine Hohlwelle 46 drehbar gelagert, die mit dem Rotor der ebenfalls koaxial hierzu angeordneten elektrischen Maschine EM verbunden ist. Die Hohlwelle 46 bildet eine erste Antriebseinrichtung 16 und ist fest mit einer Hohlwelle verbunden, die den ersten Getriebeeingang 24 bildet. Die Hohlwelle 46 ist über die Kupplung 40 mit der Innenwelle 44 verbindbar.

Parallel zu der Hohl/Innenwellenanordnung 44, 46 ist eine gemeinsame Ausgangswelle 48 vorgesehen, die einen gemeinsamen ersten und zweiten Getriebeausgang 26, 32 bildet.

Die erste Getriebeanordnung 22 weist vorliegend zwei schaltbare Gangstufen 1, 3 auf, die mittels zugeordneter Synchron-Schaltkupplungen S1, S3 ein- und auslegbar sind. Die Schaltkupplungen S1, S3 sind in ein Schaltkupplungspaket integriert, das auch eine Neutralstellung ermöglicht.

Axial benachbart hierzu ist die zweite Getriebeanordnung 28 vorgesehen, die ebenfalls zwei Gangstufen 2, 4 aufweist, die mittels zugeordneter Schaltkupplungen S2, S4 ein- und auslegbar sind. Die Schaltkupplungen S2, S4 sind ebenfalls in ein Schaltkupplungspaket integriert, das ebenfalls eine Neutralstellung ermöglicht.

Die Schaltkupplungen sämtlicher Gangstufen sind vorliegend an der gemeinsamen Ausgangswelle 48 angeordnet. Die Gangstufen 1 bis 4 sind jeweils durch eine Radsatzanordnung gebildet, die ein drehbar an der Ausgangswelle 48 gelagertes Losrad und ein jeweils zugeordnetes, mit der jeweiligen Welle 42 oder 44 verbundenes Festrad aufweisen.

Die Kupplung 40 ist in axialer Richtung vorzugsweise zwischen der ersten Antriebseinheit 14 und der zweiten Antriebseinheit 18 angeordnet. Die gemeinsame Ausgangswelle 48 ist mit einer nicht näher dargestellten Abtriebseinrichtung 34 verbindbar.

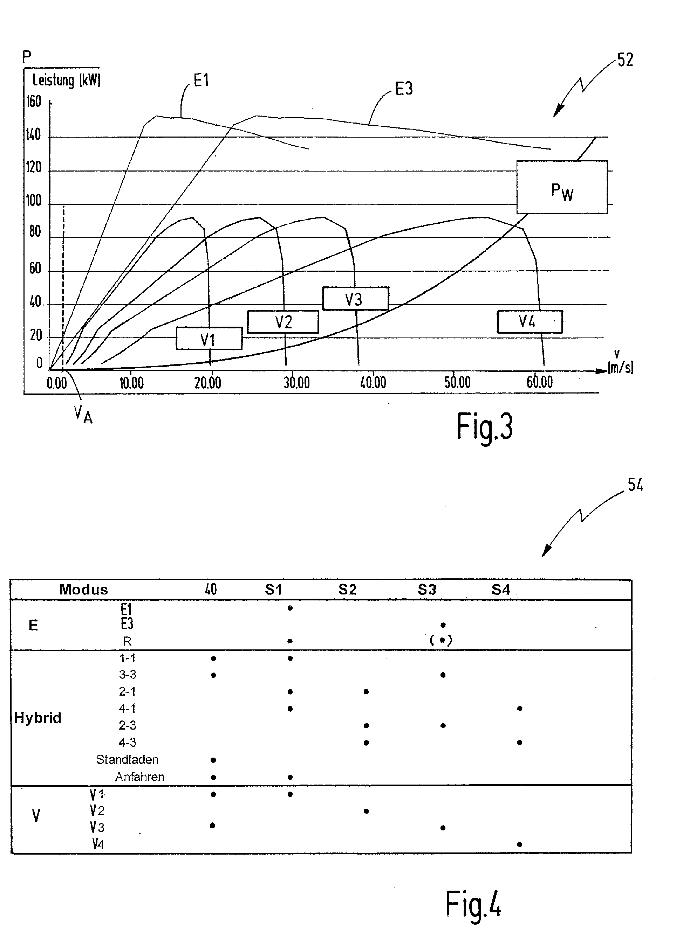

Der Antriebsstrang 10 der Fig. 2 wird nachfolgend anhand eines Diagrammes von Antriebsleistung über Fahrzeuggeschwindigkeit, das in Fig. 3 mit 52 bezeichnet ist, und einer Tabelle 54 der Fig. 4 erläutert.

Fig. 3 zeigt, dass ein verbrennungsmotorischer Betrieb in allen vier Gangstufen 1 bis 4 einrichtbar ist, wobei die in diesen Gangstufen einrichtbaren Geschwindigkeitsbereiche und erzielbaren Leistungen an den angetriebenen Rädern durch jeweilige Leistungskurven V1 bis V4 dargestellt sind. Die vier Gangstufen 1 bis 4 der zwei Getriebeanordnungen 22, 28 sind dabei in einer ähnlichen Weise gestuft, wie es bei herkömmlichen Kraftfahrzeuggetrieben in Stirnradbauweise bekannt ist. Mit anderen Worten kann in der ersten Gangstufe eine maximale Geschwindigkeit von 20 m/s eingerichtet werden, in der zweiten Gangstufe eine maximale Geschwindigkeit von etwa 28 m/s, in der dritten Gangstufe eine maximale Geschwindigkeit von etwa 38 m/s, und in der vierten Gangstufe die theoretische Maximalgeschwindigkeit im verbrennungsmotorischen Betrieb (etwa 62 m/s).

In Fig. 3 ist ferner die sich aus dem Fahrwiderstand ergebende Widerstandsleistung $P_W$ eingetragen. Diese Leistung $P_W$ ist eine Funktion des Fahrwiderstandes $F_W$, der sich wie folgt ergibt:

$$F_W = F_R + F_S + F_A + F_L,$$

wobei $F_R$ der Rollwiderstand ist, wobei $F_S$ der Steigungswiderstand ist, wobei $F_A$ der Beschleunigungswiderstand ist, und wobei $F_L$ der Luftwiderstand ist. Der Rollwiderstand ist eine Funktion der Masse des Fahrzeugs und der Steigung (Steigung der Fahrbahn, auf der das Fahrzeug fährt). Der Steigungswiderstand ist ebenfalls eine Funktion der Masse und der Steigung. Der Beschleunigungswiderstand ist eine Funktion der Masse und der Beschleunigung. Der Luftwiderstand ist eine Funktion des Quadrates der Fahrgeschwindigkeit v.

Aus diesem Fahrwiderstand ergibt sich eine an sich bekannte Widerstandskurve, die etwa eine Parabelform beinhaltet. Aus der Widerstandskurve ergibt sich auch, dass für die gezeigte Widerstandskurve die maximale Geschwindigkeit im verbrennungsmotorischen Betrieb etwa bei 56 m/s liegt, da dort die theoretische Antriebsleistung in der vierten Gangstufe gleich jener Leistung ist, die dem Fahrwiderstand bei dieser Geschwindigkeit entspricht.

Der Antriebsstrang 10 der Fig. 2 lässt sich ferner rein elektromotorisch betreiben. Hierbei können die Gangstufen 1 und 3 verwendet werden. Die entsprechenden maximalen Leistungskurven E1 und E2 sind in Fig. 3 ebenfalls dargestellt. Man erkennt, dass die elektrische Maschine EM vorliegend eine deutlich höhere Leistung aufweist als der Verbrennungsmotor. Die maximale Leistung kann beispielsweise größer sein als das 1,5-fache der Maximalleistung des Verbrennungsmotors, ist jedoch vorzugsweise noch deutlich höher.

Hieraus ist auch zu ersehen, dass bei der oben beschriebenen Maximalgeschwindigkeit im verbrennungsmotorischen Betrieb immer noch hinreichend Leistungsüberschuss auf Seiten der elektrischen Maschine vorhanden ist, so dass die elektrische Maschine das Fahrzeug mit einer noch höheren Geschwindigkeit antreiben könnte.

In Fig. 4 sind die verschiedenen Betriebsmodi dargestellt. Im Betriebsmodus E1 ist die Schaltkupplung S1 geschlossen. Im elektromotorischen Betriebsmodus E3 ist die Schaltkupplung S3 geschlossen. Im Rückwärtsfahrmodus ist die Schaltkupplung S1 (oder die Schaltkupplung S3) geschlossen. In sämtlichen dieser Modi sind die Schaltkupplungen S2 und S4 geöffnet, und der Verbrennungsmotor VM ist vorzugsweise stillgelegt. Ferner ist die Kupplung 40 in sämtlichen dieser Betriebsmodi geöffnet.

Im unteren Teil der Tabelle der Fig. 4 sind die vier verbrennungsmotorischen Betriebsmodi mit V1 bis V4 dargestellt. Bei Verwendung der ersten Gangstufe ist die Kupplung 40 geschlossen und die Schaltkupplung S1 geschlossen, und die anderen Schaltkupplungen sind geöffnet. In entsprechender Weise sind bei Nutzung der dritten Gangstufe die Kupplung 40 geschlossen und die Schaltkupplung S3 geschlossen, und die anderen Schaltkupplungen sind geöffnet.

In den Betriebsmodi V2 und V4 ist die Kupplung 40 jeweils geöffnet, und die Schaltkupplung S2 bzw. die Schaltkupplung S4 ist geschlossen.

Im mittleren Teil der Tabelle 54 der Fig. 4 sind die verschiedenen Hybrid-Modi beschrieben. Bei diesen wird Antriebsleistung jeweils von der elektrischen Maschine EM und von dem Verbrennungsmotor VM bereitgestellt.

Hier ist gezeigt, dass zum Anfahren vorzugsweise die Kupplung 40 geschlossen ist und die erste Gangstufe mittels der Schaltkupplung S1 angelegt ist, wobei Antriebsleistung sowohl von der elektrischen Maschine EM als auch von dem Verbrennungsmotor VM bereitgestellt wird. Der gleiche Kupplungszustand ist für den Hybrid-Modus 1-1 eingerichtet.

In entsprechender Weise kann ein Hybrid-Modus 3-3 eingerichtet werden, bei dem die Kupplung 40 geschlossen ist und die Schaltkupplung S3 geschlossen ist, um über die dritte Gangstufe sowohl elektromotorische als auch verbrennungsmotorische Antriebsleistung zu übertragen.

Ferner ist ein sogenanntes Standladen möglich, bei dem sämtliche Schaltkupplungen geöffnet sind und die Kupplung 40 geschlossen ist. Hierbei wird der Verbrennungsmotor VM angetrieben, um die elektrische Maschine EM im generatorischen Betrieb (rekuperierend) zu betreiben.

In sämtlichen anderen Hybrid-Antriebsmodi ist die Kupplung 40 geöffnet, wobei in jeder der Getriebeanordnungen 22, 28 jeweils eine Gangstufe eingelegt ist, beispielsweise im Hybrid-Modus 2-1 die Gangstufe 2 in der zweiten Getriebeanordnung 28 und die Gangstufe 1 in der ersten Getriebeanordnung 22.

Man erkennt, dass sämtliche Kombinationen möglich sind, da die Kurven E1, E3 und V1 bis V4 der Fig. 3 sich in horizontaler Richtung sämtlich überschneiden.

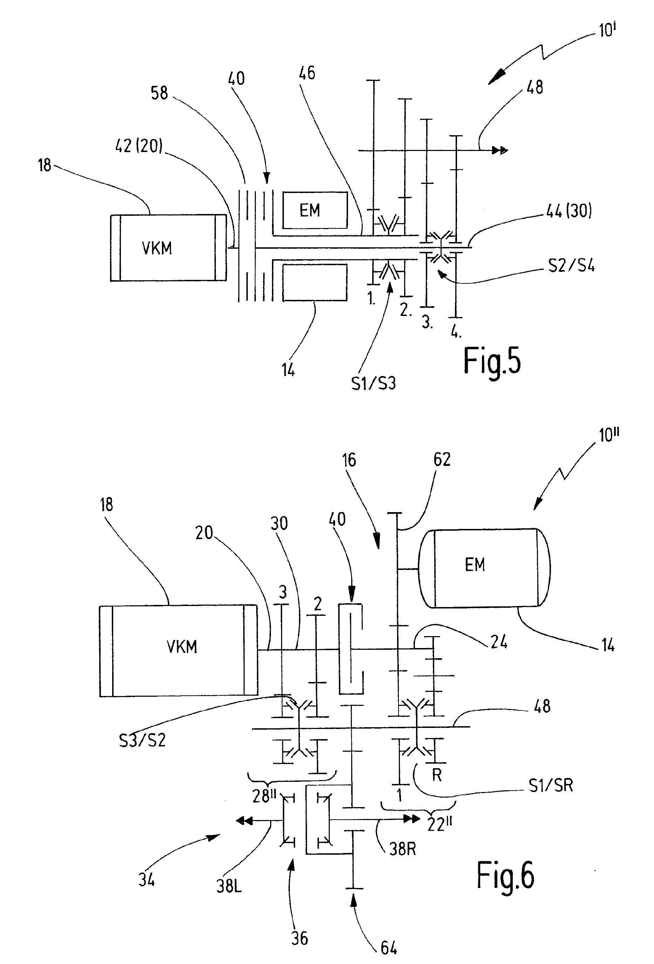

In Fig. 5 ist eine weitere Ausführungsform eines Antriebsstranges 10' dargestellt, der hinsichtlich Aufbau und Funktionsweise dem Antriebsstrang 10 der Fig. 2 entspricht. Gleiche Elemente sind daher durch gleiche Bezugszeichen gekennzeichnet. Im Folgenden werden im Wesentlichen die Unterschiede erläutert.

So weist der Antriebsstrang 10' der Fig. 5 eine weitere Kupplung 58 auf, die die zweite Antriebseinrichtung 20 mit dem zweiten Getriebeeingang 30 verbindet oder hiervon trennt.

Bei dieser Ausführungsform ist die weitere Kupplung 58 vorzugsweise als eine Art Doppelkupplung mit der Kupplung 40 integriert und ebenfalls in axialer Richtung zwischen der ersten Antriebseinheit 14 und der zweiten Antriebseinheit 18 angeordnet.

Mit dem Antriebsstrang 10' der Fig. 5 lassen sich sämtliche Betriebsmodi der Fig. 4 einrichten. In allen Fällen, bei denen die Kupplung 40 geschlossen ist, ist dabei die weitere Kupplung 58 ebenfalls zu schließen.

Allerdings ist es mit dem Antriebsstrang 10' der Fig. 5 auch möglich, einen elektrischen Betriebsmodus E2 und einen elektrischen Betriebsmodus E4 einzurichten, bei dem die weitere Kupplung 58 geöffnet ist und elektromotorische Antriebsleistung über die zweite Getriebeanordnung 28 geführt wird. Hierdurch kann die elektrische Maschine EM vier Gangstufen zum Antrieb nutzen.

Bei der Ausführungsform der Fig. 5 sind zudem in Abwandlung zu der Ausführungsform der Fig. 2 die Losräder der Gangstufen-Radsätze und die zugeordneten Schaltkupplungen S1 bis S4 an der Hohlwelle 46 bzw. der Innenwelle 44 angeordnet, und die gemeinsame Ausgangswelle 48 ist mit zugeordneten Festrädern verbunden.

Eine weitere Ausführungsform eines erfindungsgemäßen Antriebsstranges ist in Fig. 6 mit 10" bezeichnet. Auch diese Ausführungsform entspricht hinsichtlich Aufbau und Funktionsweise generell dem Antriebsstrang 10 der Fig. 1 und 2. Gleiche Elemente sind folglich mit gleichen Bezugszeichen versehen. Im Folgenden werden im Wesentlichen die Unterschiede erläutert.

In dem Antriebsstrang 10" der Fig. 6 ist die elektrische Maschine EM der ersten Antriebseinheit 14 parallel versetzt zu der zweiten Antriebseinheit 28 angeordnet. Eine Motorwelle der elektrischen Maschine EM ist mit einem Antriebsrad 62 verbunden, das mit einem Rad (hier Festrad) des Radsatzes einer Gangstufe der ersten Getriebeanordnung 22" in Eingriff steht. Hierdurch kann die elektrische Maschine EM mit hohen Drehzahlen betrieben werden, so dass diese generell kompakt ausgebildet sein kann.

Bei der Ausführungsform der Fig. 6 sind zudem die erste Getriebeanordnung 22" und die zweite Getriebeanordnung 28" auf axial gegenüberliegenden Seiten der Kupplung 40 angeordnet, wobei eine den ersten Getriebeeingang 24 bildende Welle und eine den zweiten Getriebeeingang 30 bildende Welle koaxial zueinander ausgerichtet sind. Die Kurbelwelle 42 des Verbrennungsmotors VM und die Motorwelle der elektrischen Maschine EM weisen in axialer Richtung aufeinander zu. Radsätze für die Vorwärtsgangstufen sind in axialer Richtung zwischen dem Verbrennungsmotor VM und der elektrischen Maschine EM angeordnet.

Die Abtriebseinrichtung 34 beinhaltet bei dem Antriebsstrang 10" einen Abtriebsradsatz 64, der in axialer Richtung mit der Kupplung 40 ausgerichtet ist und der ein mit einem Eingangsglied des Differentials 36 verbundenes Rad aufweist.

Der Antriebsstrang 10" der Fig. 6 ist insbesondere für den Front-Quer-einbau in einem Kraftfahrzeug ausgelegt. Das Differential 36 und die Getriebeanordnungen 22", 28" sind vorzugsweise in einem gemeinsamen Getriebegehäuse, das in Fig. 6 nicht dargestellt ist, integriert.

Die erste Getriebeanordnung 22" weist vorliegend einen Radsatz für die Gangstufe 1 auf. Zusätzlich hierzu weist die erste Getriebeanordnung 22" einen Radsatz für eine Rückwärtsgangstufe R auf. In entsprechender Weise beinhaltet die erste Getriebeanordnung 22" eine Schaltkupplung S1 für die Gangstufe 1 und eine Schaltkupplung SR für die Rückwärtsgangstufe R.

Die zweite Getriebeanordnung 28" weist vorliegend zwei Gangstufen 2, 3 auf, die durch entsprechende Radsätze mit Schaltkupplungen S3/S2 ein- und auslegbar sind.

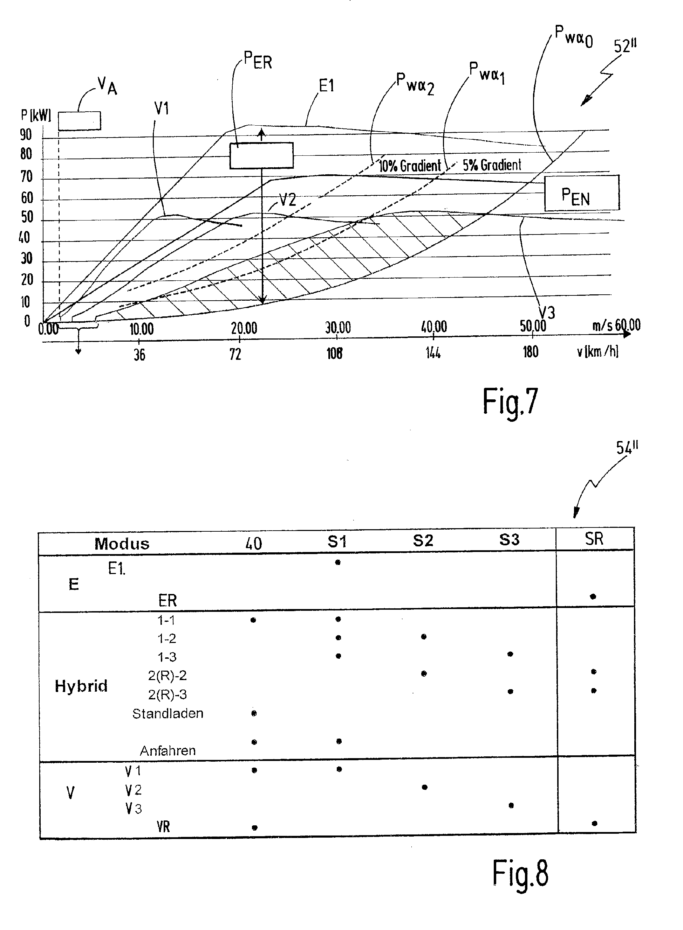

Die Fig. 7 zeigt ein Diagramm 52" von Leistung über Geschwindigkeit für den Antriebsstrang 10", wobei das Diagramm vom grundsätzlichen Aufbau her dem Diagramm 52 der Fig. 3 ähnelt. In entsprechender Weise zeigt Fig. 8 eine Schalttabelle 54" für den Antriebsstrang 10" der Fig. 6, wobei die Tabelle 54" generell ähnlich aufgebaut ist wie die Tabelle 54 der Fig. 4.

Im Folgenden werden daher lediglich die Unterschiede erläutert.

Zum einen ist im rein elektrischen Antriebsmodus nur eine einzige Vorwärtsfahrstufe einrichtbar, nämlich über die Gangstufe 1. Demzufolge ist in der Fig. 7 lediglich eine Leistungskurve E1 für den elektromotorischen Fahrbetrieb vorhanden, bei dem die Schaltkupplung S1 eingelegt ist und die Kupplung 40 geöffnet ist.

Allerdings ist elektromotorisch auch ein Rückwärtsfahrbetrieb einrichtbar, und zwar über die Rückwärtsgangstufe R, wobei die Schaltkupplung SR geschlossen ist.

In entsprechender Weise ist aufgrund des Vorhandenseins des Radsatzes für die Rückwärtsgangstufe R auch im verbrennungsmotorischen Betrieb ein Rückwärts-Betriebsmodus VR einrichtbar, bei dem die Kupplung 40 geschlossen ist und die Schaltkupplung SR geschlossen ist.

Verbrennungsmotorisch sind drei Betriebsmodi entsprechend den drei Gangstufen einrichtbar, die in Fig. 7 und Fig. 8 mit V1, V2 und V3 bezeichnet sind.

Entsprechend zu der Tabelle der Fig. 4 sind ebenfalls Hybrid-Modi einrichtbar, die sich aus dem mittleren Teil der Tabelle 54" der Fig. 8 ergeben. Diese beinhalten neben Parallelhybrid-Betriebsmodi zum Vorwärtsfahren auch Hybrid-Betriebsmodi zum Rückwärtsfahren.

Ein Anfahren erfolgt vorzugsweise ebenfalls über den Radsatz der Gangstufe 1, wobei sowohl verbrennungsmotorische als auch elektromotorische Leistung bereitgestellt wird, die Kupplung 40 also geschlossen ist.

Ferner ist auch ein Standladen möglich, bei dem sämtliche Schaltkupplungen geöffnet sind und die Kupplung 40 geschlossen ist.

Bei dem Antriebsstrang 10" ist es generell auch möglich, eine weitere Kupplung 40 vorzusehen, wie sie in Fig. 5 mit 58 bezeichnet ist. Diese weitere Kupplung würde wie bei der dortigen Ausführungsform die zweite Antriebseinrichtung 20 mit dem zweiten Getriebeeingang 30 verbinden, wobei eine solche weitere Kupplung mit der Kupplung 40 integriert sein könnte, vom Aufbau her ähnlich wie bei der Ausführungsform der Fig. 5.

In Fig. 7 ist mit E1 die Maximalleistung dargestellt, die bei der jeweiligen Geschwindigkeit mittels der elektrischen Maschine EM bereitstellbar ist. Ferner zeigt Fig. 7 auch eine Kurve, die die Nennleistung der elektrischen Maschine EM darstellt. Der Schnittpunkt dieser Kurve $P_{EN}$ mit der Widerstandskurve $P_W$ ergibt jeweils die maximale Höchstgeschwindigkeit im Dauerbetrieb. In Fig. 7 sind ferner Widerstandskurven für eine Steigung von 0 % ($P_{W\alpha0}$), sowie zwei weitere Widerstandskurven mit Steigungen von 5 % bzw. 10 % dargestellt ($P_{W\alpha1}$, $P_{W\alpha2}$).

Fig. 7 zeigt ferner schematisch bei $P_{ER}$ die elektrische Reserveleistung, die sich als Differenz zwischen der Widerstandskurve und der Maximalleistungskurve E1 darstellt. Als Reserve wird dies bezeichnet, weil, wie nachstehend beschrieben werden wird, im Betrieb die stationäre Widerstandsleistung, die auf dem Rollwiderstand und dem Luftwiderstand und gegebenenfalls dem Steigungswiderstand beruht, durch den Verbrennungsmotor VM abgedeckt wird.

In den Fig. 3 und 7 ist ferner jeweils eine Geschwindigkeitsschwelle $v_A$ dargestellt, die beispielsweise bei 7 oder 8 km/h liegen kann. Diese Schwelle zeigt an, ab welcher Geschwindigkeit die Kupplung 40 im verbrennungsmotorischen Betrieb geschlossen sein sollte.

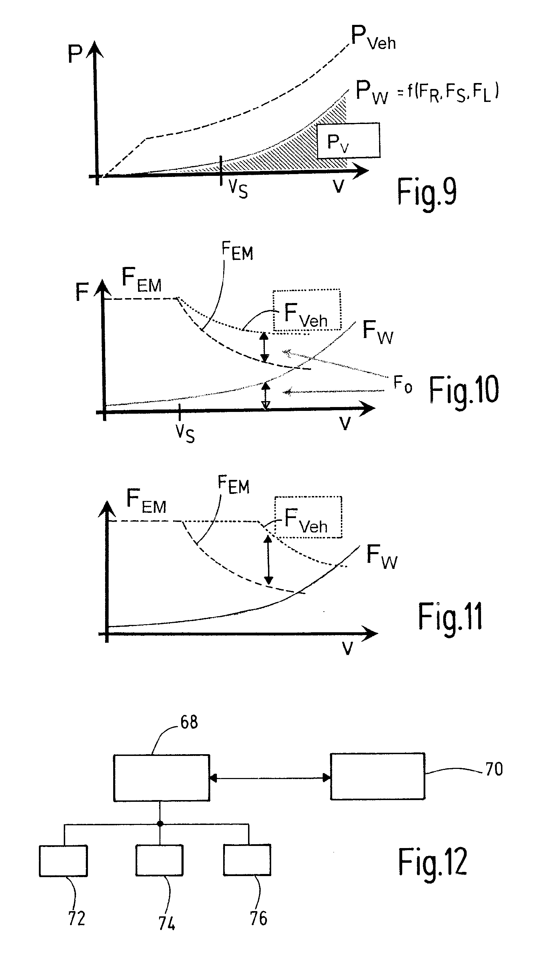

Fig. 9 zeigt ebenfalls ein schematisches Diagramm von Leistung über Geschwindigkeit, wobei gezeigt ist, dass zumindest oberhalb eines Geschwindigkeits-Schwellenwertes $V_S$ eine Antriebsleistung $P_V$ von dem Verbrennungsmotor VM bereitgestellt wird, die bei der jeweiligen Geschwindigkeit v dem stationären Fahrwiderstand (Widerstandskurve $P_W$) entspricht, der sich aus dem Rollwiderstand, dem Steigungswiderstand und dem Luftwiderstand ($F_R$, $F_S$, $F_L$) ergibt.

Lediglich die zum Beschleunigen notwendige Leistung (der zu überwindende Beschleunigungswiderstand $F_B$) wird bei diesem Betriebsmodus durch die elektrische Maschine EM abgedeckt. Es ist in Fig. 9 zu erkennen, dass die von dem Antriebsstrang 10 bereitstellbare Leistung $P_{VEH}$ (= $P_V$) dabei generell größer ist als die Leistung, die sich aus dem Fahrwiderstand ergibt.

Fig. 10 und Fig. 11 zeigen jeweils Diagramme von Kraft über Geschwindigkeit, in die die Fahrwiderstände $F_W$ eingetragen sind. Ferner ist die von der elektrischen Maschine EM bereitstellbare Antriebskraft $F_{EM}$ dargestellt. In der Darstellung der Fig. 10 ist gezeigt, dass sich oberhalb eines Schwellenwertes $V_S$ entweder eine Maximalleistung darstellen lässt, die durch Addition der Kraft $F_{EM}$ der elektrischen Maschine EM und einer Offsetkraft $F_O$ ergibt, die von dem Verbrennungsmotor VM bereitgestellt wird. Diese Offsetkraft $F_O$ wird in der Regel jedoch zur Überwindung des Fahrwiderstandes $F_W$ genutzt, was in Fig. 10 ebenfalls dargestellt ist.

Fig. 11 zeigt ein der Fig. 10 entsprechendes Diagramm, bei dem ein Betriebsmodus gezeigt ist, bei dem sowohl die elektrische Maschine EM als auch der Verbrennungsmotor VM zum Antrieb verwendet werden, was zu einer Gesamtkraft $F_{VEH}$ führt.

Fig. 12 zeigt in schematischer Form unterschiedliche, von den oben beschriebenen Antriebssträngen einrichtbare Betriebsmodi.

Bei 68 ist ein sogenannter Normalbetriebsmodus dargestellt, der in Abhängigkeit von einem Ladezustand des elektrischen Energiespeichers 15 in einen Hilfsbetriebsmodus 70 umgeschaltet werden kann.

Im Hilfsbetriebsmodus 70 wird der Antriebsstrang 10 ausschließlich verbrennungsmotorisch betrieben, und zwar dann, wenn der Ladezustand des elektrischen Energiespeichers 15 unter einen bestimmten Schwellenwert fällt.

Im Normalbetriebszustand 68 ist hingegen davon auszugehen, dass der elektrische Energiespeicher 15 hinreichend geladen ist, um sowohl verbrennungsmotorische als auch elektromotorische Leistung abrufen zu können.

Im Normalbetrieb 68 können drei unterschiedliche Betriebsmodi 72, 74, 76 eingerichtet werden. Ein erster Betriebsmodus 72 ist ein sogenannter Auto-Modus, bei dem die oben beschriebene Strategie verfolgt wird, wonach der Verbrennungsmotor VM oberhalb einer Geschwindigkeitsschwelle im Wesentlichen dazu verwendet wird, den Rollwiderstand, den Luftwiderstand und gegebenenfalls den Steigungswiderstand zu überwinden. Die elektrische Maschine EM wird bei positiven Beschleunigungsanforderungen dazu verwendet, diese zu erfüllen, oder wird bei negativen Beschleunigungsanforderungen (Bremsen) in den Generatorzustand versetzt. Ferner ist in dem ersten Betriebsmodus 72 vorgesehen, dass in einem Geschwindigkeitsbereich unterhalb des ersten Schwellenwertes die elektrische Maschine EM als ausschließliche Antriebsquelle verwendet und der Verbrennungsmotor VM abgeschaltet wird (und die Kupplung 40 geöffnet wird).

Der zweite Betriebsmodus 74 ist ein Betriebsmodus, bei dem der Antriebsstrang 10 allein mittels der elektrischen Maschine EM betrieben wird, wobei der Verbrennungsmotor VM stillgelegt ist.

Der dritte Betriebsmodus 76 schließlich ist ein Hybrid-Antriebsmodus, bei dem Antriebsleistung von der ersten und von der zweiten Antriebseinheit 14, 18 bereitgestellt wird, derart, dass jeweils eine maximale Dynamik einrichtbar ist, der Verbrennungsmotor VM also zum Auffüllen der Leistungskurve der elektrischen Maschine EM verwendet wird, wie es schematisch in Fig. 11 dargestellt ist.

Eine Anwahl des ersten oder des zweiten Betriebsmodus 72, 74 erfolgt vorzugsweise manuell durch den Fahrer des Kraftfahrzeuges. Da dieser in der Regel sein Ziel und damit die Sollentfernung kennt, kann der Fahrer beispielsweise bewusst den zweiten, rein elektrischen Betriebsmodus 74 anwählen, wenn er das Fahrzeug nur während einer kurzen Strecke benutzen möchte. Vorzugsweise ist ferner vorgesehen, dass bei Starten des Kraftfahrzeuges standardmäßig immer der erste Betriebsmodus 72 ausgewählt ist, und ausgehend hiervon der zweite Betriebsmodus 74 manuell anwählbar ist.

Der dritte Betriebsmodus kann entweder ebenfalls manuell angewählt werden, nach der Art eines "Sport-Modus". Ferner ist es bevorzugt, wenn der dritte Betriebsmodus aus dem ersten und/oder aus dem zweiten Betriebsmodus heraus automatisch angewählt werden kann, wenn der Fahrer eine besonders hohe Leistungsanforderung hat, beispielsweise erfassbar über einen Kick-down-Schalter, der dem Gaspedal zugeordnet ist. Hierdurch kann beispielsweise auch aus dem elektrischen Betriebsmodus heraus kurzfristig (beispielsweise für Abschnitte mit positiven Fahrbansteigungen) ein höheres Antriebsmoment bereitgestellt werden.

## Patentansprüche

1. Hybrid-Antriebsstrang (10) für ein Kraftfahrzeug (12), mit

   - einer ersten Antriebseinheit (14), die eine erste Antriebseinrichtung (16) aufweist, über die erste Antriebsleistung bereitstellbar ist;
   - einer zweiten Antriebseinheit (18), die eine zweite Antriebseinrichtung (20) aufweist, über die zweite Antriebsleistung bereitstellbar ist;
   - einer Abtriebseinrichtung (34), die mit angetriebenen Rädern (38L, 38R) des Kraftfahrzeuges (12) verbindbar ist;
   - einer ersten Getriebeanordnung (22), die einen ersten Getriebeeingang (24) und einen ersten Getriebeausgang (26) aufweist;
   - einer zweiten Getriebeanordnung (28), die einen zweiten Getriebeeingang (30) und einen zweiten Getriebeausgang (32) aufweist;
   - wobei die erste Antriebseinrichtung (16) mit dem ersten Getriebeeingang (24) verbunden ist und wobei die zweite Antriebseinrichtung (20) mit dem zweiten Getriebeeingang (30) verbunden ist; und
   - wobei der erste und der zweite Getriebeausgang (26, 32) mit der Abtriebseinrichtung (34) verbunden sind;

   **dadurch gekennzeichnet, dass**
   der erste und der zweite Getriebeeingang (24, 30) über eine Kupplung (40) miteinander verbindbar oder voneinander trennbar sind.

2. Antriebsstrang nach Anspruch 1, **dadurch gekennzeichnet, dass** die erste Getriebeanordnung (22) wenigstens eine erste schaltbare Gangstufe (1) aufweist.

3. Antriebsstrang nach Anspruch 2, **dadurch gekennzeichnet, dass** die erste schaltbare Gangstufe eine Anfahrgangstufe (1) des Antriebsstranges (10) darstellt.

4. Antriebsstrang nach einem der Ansprüche 1 bis 3, **dadurch gekennzeichnet, dass** die erste Getriebeanordnung (22) eine Rückwärtsgangstufe (R) aufweist.

5. Antriebsstrang nach einem der Ansprüche 1 bis 4, **dadurch gekennzeichnet, dass** die zweite Getriebeanordnung (28) wenigstens zwei schaltbare Gangstufen (2, 4; 1, 3) aufweist.

6. Antriebsstrang nach einem der Ansprüche 1 bis 5, **dadurch gekennzeichnet, dass** die von der ersten Getriebeanordnung (22) einrichtbare Übersetzung bzw. einrichtbaren Übersetzungen und die von der zweiten Getriebeanordnung (28) einrichtbare Übersetzung bzw. einrichtbaren Übersetzungen unterschiedlich sind.

7. Antriebsstrang nach einem der Ansprüche 1 bis 6, **dadurch gekennzeichnet, dass** die erste Antriebseinheit (14) genau eine elektrische Maschine (EM) aufweist, wobei die zweite Antriebseinheit (18) einen Verbrennungsmotor (VM) und keine elektrische Maschine aufweist.

8. Antriebsstrang nach einem der Ansprüche 1 bis 7, **dadurch gekennzeichnet, dass** der Antriebsstrang (10) einen elektrischen Energiespeicher (15) für eine elektrische Maschine aufweist, dessen Kapazität kleiner ist als 20 kWh, insbesondere kleiner ist als 15 kWh.

9. Antriebsstrang nach einem der Ansprüche 1 bis 8 oder nach dem Oberbegriff des Anspruchs 1, **dadurch gekennzeichnet, dass** die erste Antriebseinheit (14) eine elektrische Maschine (EM) aufweist, die eine erste Maximalleistung besitzt, wobei die zweite Antriebseinheit (18) einen Verbrennungsmotor (VM) aufweist, der eine zweite Maximalleistung besitzt, wobei die erste Maximalleistung größer ist als die zweite Maximalleistung, insbesondere größer ist als das 1,5-fache der zweiten Maximalleistung, und vorzugsweise größer ist als das 2,5-fache der zweiten Maximalleistung, und besonders bevorzugt größer ist als das 5-fache der zweiten Maximalleistung.

10. Antriebsstrang nach einem der Ansprüche 1 bis 9, **dadurch gekennzeichnet, dass** die zweite Antriebseinrichtung (20) fest mit dem zweiten Getriebeeingang (30) verbunden ist.

11. Antriebsstrang nach einem der Ansprüche 1 bis 9, **dadurch gekennzeichnet, dass** die zweite Antriebseinrichtung (20) über eine weitere Kupplung (58) mit dem zweiten Getriebeeingang (30) verbunden ist.

12. Antriebsstrang nach einem der Ansprüche 1 bis 11, **dadurch gekennzeichnet, dass** die erste Antriebseinrichtung (16) eine Hohlwelle (46) aufweist, wobei die zweite Antriebseinrichtung (20) eine Innenwelle (44) aufweist, die sich durch die Hohlwelle (46) hindurch erstreckt.

13. Antriebsstrang nach einem der Ansprüche 1 bis 12, **dadurch gekennzeichnet, dass** die erste Antriebseinrichtung (16) ein Antriebsrad (62) aufweist.

**14.** Antriebsstrang nach einem der Ansprüche 1 bis 13, **dadurch gekennzeichnet, dass** der erste Getriebeausgang (26) und der zweite Getriebeausgang (32) eine gemeinsame Ausgangswelle (48) aufweisen.

**15.** Verfahren zum Ansteuern eines Antriebstranges (10) nach einem der Ansprüche 1 bis 14 oder nach dem Oberbegriff des Anspruchs 1, mit den Schritten, die zweite Antriebseinheit (18) in einem ersten Betriebsmodus während der Fahrt so anzusteuern, dass die zweite Antriebseinheit (18) zumindest oberhalb eines ersten Schwellenwertes ($V_S$) der Geschwindigkeit (v) des Kraftfahrzeuges (12) eine Antriebsleistung ($P_V$) bereitstellt, die dem Rollwiderstand des Fahrzeugs (12) und dem Luftwiderstand des Fahrzeugs (12) bei der jeweiligen Geschwindigkeit entspricht.

**16.** Verfahren zum Ansteuern eines Antriebstranges nach einem der Ansprüche 1 bis 14 oder nach dem Oberbegriff des Anspruchs 1 oder Verfahren nach Anspruch 15, wobei die erste Antriebseinheit (14) eine elektrische Maschine (EM) aufweist, mit den Schritten, die erste Antriebseinheit (14) in einem ersten Betriebsmodus (72) während der Fahrt so anzusteuern, dass die erste Antriebseinheit (14) oberhalb eines ersten Schwellenwertes ($V_S$) der Geschwindigkeit (v) des Kraftfahrzeuges (12) eine für eine angeforderte positive Beschleunigung erforderliche motorische Antriebsleistung bereitstellt und/oder zumindest einen Teil einer für eine angeforderte negative Beschleunigung erforderlichen Bremsleistung im Generatorbetrieb bereitstellt.

**17.** Verfahren nach Anspruch 15 oder 16, wobei die erste und/oder die zweite Antriebseinheit (14, 18) so angesteuert wird, dass diese in einem ersten Betriebsmodus (72) während der Fahrt eine motorische Antriebsleistung bereitstellt, die einem positiven Steigungswiderstand entspricht.

**18.** Verfahren nach einem der Ansprüche 15 bis 17, wobei die erste Antriebseinheit (14) eine elektrische Maschine (EM) aufweist und wobei die erste Antriebseinheit (14) so angesteuert wird, dass diese in einem ersten Betriebsmodus (72) während der Fahrt eine Generatorleistung bereitstellt, die zumindest einem Teil eines negativen Steigungswiderstandes entspricht.

**19.** Verfahren nach einem der Ansprüche 15 bis 18, wobei die erste Antriebseinheit (14) eine elektrische Maschine (EM) aufweist, wobei die zweite Antriebseinheit (18) einen Verbrennungsmotor (VM) aufweist und wobei der Antriebsstrang (10) in einem zweiten Betriebsmodus (74) so angesteuert wird, dass Antriebsleistung und/oder Bremsleistung nur von der ersten Antriebseinheit (14) bereitgestellt werden.

**20.** Verfahren nach einem der Ansprüche 15 bis 19, wobei die erste Antriebseinheit (14) eine elektrische Maschine (EM) aufweist, wobei die zweite Antriebseinheit (18) einen Verbrennungsmotor (VM) aufweist und wobei der Antriebsstrang (10) in einem dritten Betriebsmodus (76) so angesteuert wird, dass Antriebsleistung von der ersten Antriebseinheit (14) und von der zweiten Antriebseinheit (18) bereitgestellt wird und dass Bremsleistung von der ersten Antriebseinheit (14) im Generatorbetrieb bereitgestellt wird.

**21.** Verfahren zum Ansteuern eines Antriebstranges nach einem der Ansprüche 1 bis 14 oder nach dem Oberbegriff des Anspruchs 1 oder Verfahren nach einem der Ansprüche 15 bis 20, wobei die erste Antriebseinheit (14) eine elektrische Maschine (EM) aufweist, wobei die zweite Antriebseinheit (18) einen Verbrennungsmotor (VM) aufweist und wobei der Antriebsstrang (10) in zumindest einem Betriebsmodus eines Normalbetriebs (68) des Antriebsstranges (10) während der Fahrt so angesteuert wird, dass die zweite Antriebseinheit (18) unterhalb eines zweiten Schwellenwertes der Geschwindigkeit des Kraftfahrzeuges stillgelegt wird und nur die erste Antriebseinheit (14) Antriebsleistung bereitstellt.

**22.** Verfahren zum Ansteuern eines Antriebstranges nach einem der Ansprüche 1 bis 14 oder nach dem Oberbegriff des Anspruchs 1 oder Verfahren nach einem der Ansprüche 15 bis 21, wobei die erste Antriebseinheit (14) eine elektrische Maschine (EM) aufweist, wobei die zweite Antriebseinheit (18) einen Verbrennungsmotor (VM) aufweist, wobei der Antriebsstrang (10) zwischen einem Normalbetrieb (68) mit wenigstens einem Betriebsmodus und einem Hilfsbetrieb (70) umschaltbar ist, wobei das Umschalten in den Hilfsbetrieb (70) in Abhängigkeit von einem Ladezustand eines elektrischen Energiespeichers (15) des Antriebsstranges (10) erfolgt und wobei in dem Hilfsbetrieb (70) nur die zweite Antriebseinheit Antriebsleistung bereitstellt.

Fig.1

Fig.2

Fig.3

| Modus | | 40 | S1 | S2 | S3 | S4 |
|---|---|---|---|---|---|---|
| E | E1 | | • | | | |
| | E3 | | | | • | |
| | R | | • | | (•) | |
| Hybrid | 1-1 | • | • | | • | |
| | 3-3 | • | | | • | |
| | 2-1 | | • | • | | |
| | 4-1 | | • | | | • |
| | 2-3 | | | • | • | |
| | 4-3 | | | • | | • |
| | Standladen | • | | | | |
| | Anfahren | • | • | | | |
| V | V1 | • | • | | | |
| | V2 | | | • | | |
| | V3 | • | | | • | |
| | V4 | | | | | • |

Fig.4

Fig.5

Fig.6

Fig.7

| Modus | | 40 | S1 | S2 | S3 | SR |
|---|---|---|---|---|---|---|
| E | E1. | | • | | | |
| | ER | | | | | • |
| Hybrid | 1-1 | • | • | | | |
| | 1-2 | | • | • | | |
| | 1-3 | | • | | • | |
| | 2(R)-2 | | | • | | • |
| | 2(R)-3 | | | | • | • |
| | Standladen | • | | | | |
| | Anfahren | • | • | | | |
| V | V 1 | • | • | | | |
| | V 2 | | | • | | |
| | V 3 | | | | • | |
| | VR | • | | | | • |

Fig.8

$P_{Veh}$

$P_W = f(F_R, F_S, F_L)$

$P_V$

$v_S$

$v$

Fig.9

$F_{EM}$

$F_{EM}$

$F_{Veh}$

$F_W$

$F_0$

$v_S$

$v$

Fig.10

$F_{EM}$

$F_{EM}$

$F_{Veh}$

$F_W$

$v$

Fig.11

68

70

72    74    76

Fig.12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012079683 A2